# EUROPÄISCHE PATENTSCHRIFT

(11) **EP 3 419 871 B1**
(45) Veröffentlichungstag und Bekanntmachung des Hinweises auf die Patenterteilung: **06.11.2019**
(21) Anmeldenummer: 17706200.7
(22) Anmeldetag: 17.02.2017
(51) Int. Cl.: B60T 7/14

(54) **FAHRERASSISTENZSYSTEM MIT PER FESTSTELLBREMSE-BEDIENELEMENT AKTIVIERBARER NOTHALTEFUNKTION**
DRIVER ASSISTANCE SYSTEM WITH EMERGENCY FUNCTION ACTIVATED BY PARKIGN BRAKE KNOB
SYSTEME D'ASSISTANCE DUCONDUCTEUR AVEC FONCTION DE SECOURS ACTIVÉE PAR MOYEN DU BOUTON DU FREIN DE STATIONNEMENT.

(30) Priorität: 25.02.2016 DE 102016203020
(43) Veröffentlichungstag der Anmeldung: 02.01.2019
(73) Patentinhaber: Bayerische Motoren Werke Aktiengesellschaft, 80809 München (DE)
(72) Erfinder: UNGERMANN, Sören, 80798 München (DE)
(86) Internationale Anmeldenummer: PCT/EP2017/053583
(87) Internationale Veröffentlichungsnummer: WO 2017/144355

(56) Entgegenhaltungen:
- DE-A1-102005 016 001
- DE-A1-102011 109 618
- DE-A1-102012 001 312
- US-A1- 2012 123 644

## Beschreibung

Die Erfindung betrifft ein Fahrerassistenzsystem mit Nothaltefunktion gemäß dem Oberbegriff des Anspruchs 1 und ein Verfahren zum Nothalten eines Kraftfahrzeugs gemäß dem Oberbegriff des unabhängigen Anspruchs 15. Aus der nächstliegenden Stand der Technik bildenden Druckschrift DE 10 2010 044 024 A1 ist ein Fahrerassistenzsystem mit Nothaltefunktion für ein Kraftfahrzeug gemäß dem Oberbegriff des Anspruchs 1 bekannt. Das Fahrzeug umfasst eine elektrische Feststellbremse und ein Feststellbremsen-Bedienelement in Form eines zur Betätigung ziehbaren Schalters, über den die Feststellbremse betätigt werden kann. Es ist vorgesehen, dass auch während der Fahrt das Feststellbremsen-Bedienelement betätigt werden kann, wobei in diesem Fall das Fahrzeug unabhängig von der Betätigung des Bremspedals abgebremst wird. Dies wird in der Druckschrift als Normalbremsung bezeichnet. Darüber hinaus ist bei dauerhafter Betätigung des Bedienelements über eine vorgegebene Mindestdauer (z. B. 10 Sekunden) hinaus eine Nothaltefunktion aktivierbar, bei der das Fahrzeug beispielsweise in einen autonomen Fahrmodus wechselt und ein autonomes Nothaltemanöver durchführt. Hierbei wird das Fahrzeug beispielsweise nach einem oder mehreren autonom durchgeführten Spurwechseln am Seitenstreifen sicher angehalten. Die manuell vom Fahrer ausgelöste Nothaltefunktion ist in Situationen hilfreich, in denen der Fahrer während der Fahrt plötzlich nicht mehr fahrtüchtig ist, beispielsweise bei einem gesundheitlichen Problem (z. B. einem Herzinfarkt). In der Druckschrift DE 10 2012 001 312 A1 ist ein Fahrerassistenzsystem beschrieben, bei dem mittels einer Eingabevorrichtung, beispielsweise mittels eines Schalters, ein Bedienbefehl eingebbar ist. Erfolgt eine solche Eingabe, so ist ein autonom durchführbares Fahrmanöver auslösbar. Das Fahrerassistenzsystem ermöglicht einen durch den Fahrer oder einen Beifahrer auslösbaren Nothalt für den Fall einer Fahruntüchtigkeit des Fahrers. Ferner kann auch vorgesehen sein, dass der Bedienbefehl eine von dem Fahrerassistenzsystem des Kraftfahrzeugs automatisch erkannte kritische Situation validiert. Weiterer Stand der Technik kann in Dokument US 2012/123644 A1 gefunden werden.

In der Druckschrift "Umfelderfassung für den Nothalteassistenten - ein System zum automatischen Anhalten bei plötzlich reduzierter Fahrfähigkeit des Fahrers", Nico Kämpchen et al., abrufbar unter http://www1.smart-senior.de/pdf/pub/SmartSenior_AAET_BMW_2010.pdf, ist ein Nothalteassistenzsystem beschrieben. Dort ist ausgeführt, dass ein automatisierter Nothalt auf einem Pannenstreifen bei geringem Verkehrsaufkommen das optimale Vorgehen ist, während bei hohem Verkehrsaufkommen, das Fahrzeug innerhalb der aktuellen Fahrspur bis in den Stillstand automatisch abgebremst werden soll.

Es ist Aufgabe der Erfindung, ein Fahrerassistenzsystem mit einem alternativen Bedienkonzept zur Auslösung einer Nothaltefunktion unter Verwendung des Feststellbremsen-Bedienelements anzugeben, wobei das Bedienkonzept ein einfaches Auslösen der Nothaltefunktion ermöglicht soll. Ferner ist die Aufgabe auf die Angabe eines entsprechenden Verfahrens zum Nothalten eines Fahrzeugs gerichtet.

Die Aufgabe wird durch die Merkmale der unabhängigen Patentansprüche gelöst. Vorteilhafte Ausführungsformen sind in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können. Beispielsweise kann die Idee der Entscheidung über den durchzuführenden Nothaltefahrmanövertyp in Abhängigkeit einer für das Verkehrsaufkommen charakteristischen Größe auch unabhängig von dem im Anspruch 1 beschriebenen Bedienkonzept des Fahrerassistenzsystems umgesetzt werden.

Ein erster Aspekt der Erfindung betrifft ein Fahrerassistenzsystem mit Nothaltefunktion für ein Kraftfahrzeug. Das Kraftfahrzeug umfasst eine elektrische Feststellbremse, insbesondere eine elektromechanische Feststellbremse (EMF). Zum Aktiveren der elektrischen Feststellbremse, insbesondere bei Stillstand des Fahrzeugs, dient ein Feststellbremse-Bedienelement. Hierbei handelt es sich vorzugsweise um ein mit der Hand betätigbares Bedienelement, beispielsweise einen Schalter in der Mittelkonsole oder in der Armaturentafel. Beispielsweise handelt es sich bei dem Feststellbremse-Bedienelement um einen Schalter, der zum Aktivieren der Feststellbremse zu ziehen ist. Das Fahrerassistenzsystem ist eingerichtet, in Abhängigkeit der Betätigung des Feststellbremse-Bedienelements eine Nothaltefunktion zu aktivieren, und im Rahmen der Nothaltefunktion ein autonomes Nothaltefahrmanöver zum Nothalten des Fahrzeugs durchzuführen. Beispielsweise wird das Fahrzeug im Rahmen des autonomen Nothaltefahrmanövers ausgehend von der aktuellen Fahrspur mit autonomer Längs- und Querführung auf einem Seitenstreifen der Fahrbahn zum Halten gebracht. Zum Anhalten des Fahrzeugs wird vorzugsweise das hydraulische Betriebsbremssystem verwendet. Das Fahrerassistenzsystem kann zusätzlich eingerichtet sein, im Rahmen der Nothaltefunktion automatisch ein Warnblinken des Fahrzeugs und/oder einen Notruf auszulösen.

Das erfindungsgemäße Fahrerassistenzsystem kennzeichnet sich dadurch, dass das Fahrerassistenzsystem eingerichtet ist, die Nothaltefunktion erst in Reaktion auf ein Beenden der Betätigung des Feststellbremse-Bedienelements zu aktivieren. Vorzugsweise wird schon während der Betätigung des Feststellbremse-Bedienelements (beispielsweise beim Ziehen eines Feststellbremse-Schalters) ein Abbremsen des Kraftfahrzeugs bewirkt, welches nicht Teil des autonomen Nothaltemanövers ist.

Das erfindungsgemäße Fahrerassistenzsystem weist den Vorteil auf, dass die Nothaltfunktion in Notsituationen durch intuitives Betätigen des Feststellbremse-Bedienelements und anschließendes Beenden der Betätigung in jedem Fall aktiviert werden kann. Vorzugsweise wird die Nothaltefunktion unabhängig von der Zeitdauer der Betätigung des Feststellbremse-Bedienelements aktiviert, ohne dass eine bestimmte Mindestzeitdauer überschritten werden muss. Die Bedienperson

(beispielsweise der Fahrer oder der Beifahrer) muss bei dem erfindungsgemäßen Bedienkonzept also nicht zwingend wissen, dass zur Auslösung der Nothaltefunktion das Feststellbremse-Bedienelement länger als eine vorgegebene Mindestbetätigungsdauer betätigt werden muss.

Sofern schon während der Betätigung des Feststellbremse-Bedienelements ein manuelles Abbremsen des Kraftfahrzeugs erfolgt, welches nicht Teil des autonomen Nothaltemanövers ist, erlaubt das erfindungsgemäße Bedienkonzept ein manuelles Bremsen des Fahrzeugs in den Stillstand durch dauerhafte Betätigung des Feststellbremse-Bedienelements (beispielsweise zum Anhalten am Fahrtziel; anschließend kann durch das gleiche Bedienelement die Feststellbremse eingelegt werden), ohne dass während des Bremsmanövers zwingend die Nothaltefunktion aktiviert wird, weil eine bestimmte Betätigungszeitdauer überschritten wurde.

Es ist natürlich denkbar, dass eine Auslösung der Nothaltefunktion bei Beenden der Betätigung des Feststellbremse-Bedienelements nur dann ausgelöst wird, wenn das Feststellbremse-Bedienelement für eine Zeitdauer größer oder größer gleich als ein Zeitdauerschwellwert (z.B. 0,5 Sekunden oder weniger) vor Beenden der Betätigung betätigt wurde.

Das erfindungsgemäße Bedienkonzept zum Auslösen der Nothaltefunktion weist darüber hinaus den Vorteil auf, dass die Bedienperson, insbesondere der Fahrer, nach Beenden der Betätigung des Feststellbremse-Bedienelements unmittelbar die Hand frei hat, die Funktion durch eine entsprechende Abbruchbedienhandlung abzubrechen, sofern die Nothaltefunktion nicht gewünscht ist.

Es ist von Vorteil, wenn das Fahrerassistenzsystem eingerichtet ist, schon während der Betätigung des Feststellbremse-Bedienelements ein Abbremsen des Kraftfahrzeugs zu bewirken, welches nicht Teil des Nothaltemanövers ist. Das Abbremsen des Kraftfahrzeugs bei Betätigung des Feststellbremse-Bedienelements erfolgt vorzugsweise durch Betätigung des hydraulischen Betriebsbremssystems.

Der Fahrer hat also die Möglichkeit, während der Fahrt durch entsprechend langes Betätigen des Feststellbremse-Bedienelements ein manuell gesteuertes Abbremsen des Fahrzeugs, beispielsweise bis in den Stand, zu bewirken.

Die maximale Verzögerung beim manuellen Abbremsen des Fahrzeugs ist vorzugsweise größer ist als die maximale Verzögerung während des Nothaltemanövers, so dass beispielsweise ein schnelles Abbremsen in einer Notsituation, in der das Bremspedal ausgefallen ist, gewährleistet werden kann.

Es ist von Vorteil, wenn bei Betätigung des Feststellbremsen-Bedienelements bereits eine Spurhaltefunktion zum automatischen Halten der aktuellen Fahrspur aktiviert wird. Die Spurhaltefunktion hält die aktuelle Fahrspur selbstständig durch eine entsprechende automatische Querführung.

Konventionelle aktive Spurhalteassistenzfunktionen (beispielsweise auch als Teil eines Abstandstempomaten mit automatischer Querführung) weisen eine sogenannte Hands-On-Erkennung auf, die prüft, ob der Fahrer seine Hände am Lenkrad hat, und die Funktion abbricht, wenn der Fahrer die Hände nicht am Lenkrad hat, insbesondere für eine Zeitdauer größer oder größer gleich als ein Schwellwert die Hände nicht am Lenkrad hat.

Die vorstehend beschriebene Spurhaltefunktion, die in Reaktion auf die Betätigung des Feststellbremsen-Bedienelements aktiviert wird, weist diese Hands-On-Erkennung vorzugsweise nicht auf, so dass diese auch in einer Notsituation, in der der Fahrer die Hände nicht mehr am Lenkrad hat, aktiv bleibt.

Vor Betätigung des Feststellbremsen-Bedienelements ist beispielsweise ein Komfort-Fahrerassistenzsystem mit Spurhalteassistenzfunktion mit Hands-On-Erkennung aktiv (insbesondere als Teil eines Abstandstempomaten mit automatischer Querführung), wobei die Spurhalteassistenzfunktion den Fahrer automatisch in der Fahrspur hält. Bei Betätigung des Feststellbremse-Bedienelements wird das Komfort- Fahrerassistenzsystem vorzugsweise deaktiviert und stattdessen eine vorstehend beschriebene Spurhaltefunktion ohne Hands-On-Erkennung aktiviert.

Das Fahrerassistenzsystem ist vorzugsweise eingerichtet, die Nothaltefunktion in Reaktion auf eine Bedienhandlung (beispielsweise seitens des Fahrers oder Beifahrers) zum Abbruch der Nothaltefunktion abzubrechen.

Beispielsweise kann die Bedienhandlung durch Betätigung eines zentralen Bedienelements, beispielsweise eines Drehdrückstellers, abgebrochen werden, wobei auf einer Anzeige im Fahrzeugcockpit auf die Abbruchmöglichkeit hingewiesen wird. Alternativ wäre es denkbar, durch Bedienung eines berührungsempfindlichen Bildschirms, auf dem auf die Abbruchmöglichkeit hingewiesen wird, die Nothaltfunktion abzubrechen.

Ferner ist es denkbar, dass die Nothaltefunktion durch Betätigung des Fahrpedals, des Lenkrads oder eines Getriebewahlschalters abbrechbar ist, beispielsweise bei signifikanter Lenkradbetätigung oder einem signifikanten Beschleunigen des Fahrzeugs. Bei Betätigung des Bremspedals erfolgt vorzugsweise aber kein Abbruch der Nothaltefunktion, da diese Bedienhandlung der Systemhandlung, das Fahrzeug in den Stillstand zu bringen, entspricht.

Es ist von Vorteil, wenn der Abbruch durch Betätigung des Feststellbremse-Bedienelements selbst möglich ist. Beispielsweise ist das Feststellbremse-Bedienelement ein in zumindest zwei unterschiedliche Bedienrichtungen betätigbarer Schalter, beispielsweise ein sowohl ziehbarer als auch drückbarer Schalter.

Die Nothaltefunktion wird beispielsweise in Reaktion auf ein Beenden der in eine erste Bedienrichtung gerichteten Betätigung des Schalters aktiviert. Das Feststellbremse-Bedienelement wird also beispielsweise anfänglich gezogen und dann wird zum Auslösen der Nothaltefunktion das Ziehen beendet.

Das Fahrerassistenzsystem ist vorzugsweise eingerichtet, die Nothaltefunktion in Reaktion auf eine Betätigung des Schalters in eine zweite Bedienrichtung abzubrechen. Zum Abbrechen der Nothaltefunktion wird das Feststellbremse-Bedienelement also beispielsweise gedrückt.

Das Fahrerassistenzsystem ist beispielsweise eingerichtet, das Fahrzeug im Rahmen des autonomen Nothaltefahrmanövers ausgehend von der aktuellen Fahrspur mit einem oder mehreren Spurwechseln auf einem Seitenstreifen der Fahrbahn zum Halten zu bringen. Der Halt auf dem Seitenstreifen ist aber nicht in der jeder Fahrsituation sinnvoll. Stattdessen kann es auch sinnvoll sein, ohne Spurwechsel in der eigenen Fahrspur zu halten.

Vorzugsweise ist das Fahrerassistenzsystem daher eingerichtet, eine für das Verkehrsaufkommen charakteristische Größe durch Beobachtung des Fahrzeugumfelds zu bestimmen und in Abhängigkeit dieser charakteristischen Größe zu entscheiden, welches autonome Fahrmanöver durchgeführt werden soll. Zur Beobachtung wird eine Umfeldsensorik verwendet, beispielsweise ein LiDAR-System, ein Radar-System und/oder ein Kamera-System. Diese Idee kann auch unabhängig von dem im Anspruch 1 beschriebenen Aktivierungsmechanismus bei einem beliebigen Fahrerassistenzsystem mit Nothaltefunktion verwendet werden, wobei das Fahrerassistenzsystem eingerichtet ist, im Rahmen der Nothaltefunktion ein Nothaltemanöver zum Nothalten des Fahrzeugs durchzuführen. Die Aktivierung kann beispielsweise über ein Bedienelement oder auch automatisch durch die Beobachtung des Fahrerzustands erfolgen.

Bei der für das Verkehrsaufkommen charakteristischen Größe handelt es sich beispielsweise um eine Verkehrsdichte oder eine Verkehrsstärke. Die Verkehrsdichte gibt die Anzahl der Verkehrsteilnehmer je Wegeinheit zu einem Zeitpunkt an. Die Verkehrsstarke beschreibt die Anzahl der Verkehrsteilnehmer je Zeiteinheit in einem Querschnitt. In Abhängigkeit der für das Verkehrsaufkommen charakteristischen Größe wird entschieden, ein Nothaltfahrmanöver eines ersten autonomen Nothaltefahrmanövertyps mit Anhalten des Fahrzeugs in der eigenen Fahrspur durchzuführen oder ein Nothaltefahrmanöver eines zweiten autonomen Nothaltefahrmanövertyps mit Anhalten des Fahrzeugs auf einem Seitenstreifen der Fahrbahn durchzuführen.

Beispielsweise wird bei einem geringerem Verkehrsaufkommen entschieden, ein Nothaltefahrmanöver des zweiten Nothaltefahrmanövertyps (Anhalten auf einem Seitenstreifen) durchzuführen, während bei einem dazu höheren Verkehrsaufkommen entschieden wird, ein Nothaltefahrmanöver des ersten Nothaltefahrmanövertyps (Anhalten in der eigenen Fahrspur) durchzuführen.

Zur Entscheidung über den durchzuführenden Nothaltfahrmanövertyp kann beispielsweise ein Schwellwertvergleich der für das Verkehrsaufkommen charakteristischen Größe mit einem Schwellwert durchgeführt werden. Sofern die charakteristische Größe ein höheres Verkehrsaufkommen als das Verkehrsaufkommen des Schwellwerts anzeigt, wird beispielsweise entschieden, ein Nothaltefahrmanöver des ersten Nothaltefahrmanövertyps (Anhalten in der eigenen Fahrspur) durchzuführen. Sofern die charakteristische Größe ein niedrigeres Verkehrsaufkommen als das Verkehrsaufkommen des Schwellwerts anzeigt, wird beispielsweise entschieden, ein Nothaltefahrmanöver des zweiten Nothaltefahrmanövertyps (Anhalten auf einem Seitenstreifen mit Spurwechsel) durchzuführen.

Beispielsweise werden eine oder mehrere Zeitlücken zwischen jeweils zwei Fahrzeugen bestimmt. Bei den Zeitlücken kann es sich um Bruttozeitlücken oder Nettozeitlücken handeln. Es können eine oder mehrere Zeitlücken zwischen dem eigenen Fahrzeug und dem jeweils anderen Fahrzeug bestimmt werden. Alternativ können auch eine oder mehrere Zeitlücken zwischen von dem eigenen Fahrzeug verschiedenen Fahrzeugen bestimmt werden.

In Abhängigkeit der einen oder mehreren Zeitlücken kann die für das Verkehrsaufkommen charakteristische Größe bestimmt werden. Beispielsweise kann durch Mittelung der Zeitlücken die für das Verkehrsaufkommen charakteristische Größe bestimmt werden. Die charakteristische Größe entspricht beispielsweise dem Mittelwert der Zeitlücken oder dem Inversen des Mittelwerts der Zeitlücken (das Inverse des Mittelwerts entspricht dann einer Verkehrsstärke).

Beispielsweise wird das Verkehrsaufkommen durch Mittelung der Zeitabstände zwischen Fahrzeugen über einen gewissen Beobachtungszeitraum gemittelt (bspw. in einem Beobachtungszeitraum im Bereich von 2 bis 4 Minuten) und davon abhängig wird dann das Fahrmanöver ausgewählt. Bei hoher Verkehrsdichte ist ein Anhalten in der eigenen Spur risikominimal, da ein Stau erzeugt wird, der das Fahrzeug schützt und die höhere Gefahr, dass durch den dichten Verkehr bei einem Spurwechsel eine kritische Situation entsteht, vermieden wird. Bei geringer Verkehrsdichte ist ein Halt auf dem Standstreifen risikominimal, da eine höhere Gefahr bei Halt auf dem Fahrstreifen existiert, durch einen unaufmerksamen schnellen Fahrer übersehen zu werden, und gleichzeitig weniger Risiken bei den Spurwechseln bestehen, so dass mit höherer Wahrscheinlichkeit sicher auf den Standstreifen gefahren werden kann.

Gemäß einer Ausführungsform des erfindungsgemäßen Fahrerassistenzsystems kann dieses in Reaktion auf ein Betätigen des Feststellbremse-Bedienelements oder in Reaktion auf ein Beenden der Betätigung des Feststellbremse-Bedienelements Fahrerzustandsinformation betreffend den aktuellen Zustand des Fahrers bestimmen. Beispielsweise wird damit begonnen, Zustandsinformation über den aktuellen Fahrerzustand zu bestimmen, sobald der Fahrer das Bedienelement betätigt.

Die Fahrerzustandsinformation betrifft beispielsweise den Aufmerksamkeitszustand oder die Fahrtüchtigkeit des Fahrers. Die Aufmerksamkeit und Fahrtüchtigkeit können beispielsweise aufgrund einer plötzlichen medizinischen Notsituation eingeschränkt sein.

Bei der Fahrerzustandsinformation handelt es sich z. B. um mittels einer auf den Fahrer gerichteten Innenraumkamera bestimmter Fahrerzustandsinformation, z. B. um Information, wohin der Fahrer blickt (z. B. nach vorne), ob der Fahrer die Augen geöffnet hat und/oder wo sich der Kopf des Fahrers befindet. Derartige Information lässt Rückschlüsse auf den Zustand des Fahrers, insbesondere auf dessen Aufmerksamkeit und dessen Fahrtüchtigkeit zu.

Bei der Fahrerzustandsinformation kann es sich alternativ oder zusätzlich auch um Information handeln, die die Betätigung oder Nichtbetätigung von einem oder mehreren Fahrerbedienelementen (z. B. Lenkrad, Bremspedal oder Fahrpedal) zur manuellen Fahrzeugführung betrifft. Beispielsweise wird ermittelt, ob der Fahrer das Fahrerbedienelement normal betätigt, rückartig betätigt oder überhaupt nicht mehr betätigt.

Wenn beispielsweise bei Betätigung des Bedienelements ein Komfort-Fahrerassistenzsystem mit automatischer Längs- und/oder Querführung automatisch deaktiviert wird, kann als Fahrerzustandsinformation herangezogen werden, ob der Fahrer die Fahraufgabe übernimmt und das Fahrpedal und/oder das Lenkpedal betätigt, insbesondere normal betätigt.

Das Fahrerassistenzsystem ist eingerichtet, in Abhängigkeit der Fahrerzustandsinformation eine Aktivierung der Nothaltefunktion zu unterbinden. Alternativ oder zusätzlich kann das Fahrerassistenzsystem eingerichtet sein, eine bereits aktivierte Nothaltefunktion abzubrechen.

Wenn das Feststellbremse-Bedienelement zur Aktivierung betätigt wird, wird beispielsweise gleichzeitig der Aufmerksamkeitszustand des Fahrers durch die Kamera ausgewertet. Wenn erkannt wird, dass der Fahrer aufmerksam und fahrtüchtig ist, wird die Funktion beispielsweise nicht aktiviert, da man davon ausgehen kann, dass der Fahrer oder Beifahrer den Nothalteassistenten nicht aktivieren wollte.

Die Verwendung von Fahrerzustandsinformation erlaubt es, die Wahrscheinlichkeit einer Fehlauslösung aufgrund einer Fehlbedienung des Bedienelements zu verringern.

Da der Fahrer in Reaktion auf die Bedienhandlung beobachtet wird und die Fahrerzustandsinformation dann bestimmt wird, werden falsche Rückschlüsse über den Fahrerzustand im Vergleich zu der Verwendung von Fahrerzustandsinformation, die vor der Bedienhandlung bestimmt wurde, vermieden. Wenn beispielsweise vor der Bedienhandlung ein Komfort-Fahrerassistenzsystem mit automatischer Längs- und Querführung verwendet wurde, würde eine Fahrerbeobachtung vor der Bedienhandlung in fehlerhafter Weise auf einen inaktiven und daher möglicherweise nicht fahrtüchtigen Fahrer hinweisen.

Das vorstehende Konzept zur zusätzlichen Verwendung von Fahrerzustandsinformation ist in der deutschen Patentanmeldung "Fahrerassistenzsystem mit per Bedienelement aktivierbarer Nothaltefunktion", die am gleichen Tag wie die vorliegende deutsche Patentanmeldung beim Deutschen Patent- und Markenamt von derselben Anmelderin eingereicht wurde, beschrieben. Der Offenbarungsgehalt dieser deutschen Patentanmeldung hierzu wird hiermit durch Bezugnahme in den Offenbarungsgehalt der vorliegenden Anmeldung aufgenommen.

Ein zweiter Aspekt der Erfindung betrifft ein Verfahren zum Nothalten eines Kraftfahrzeugs. Gemäß dem Verfahren werden eine Nothaltefunktion in Abhängigkeit der Betätigung des Feststellbremse-Bedienelements aktiviert und ein autonomes Nothaltefahrmanövers zum Nothalten des Fahrzeugs im Rahmen der Nothaltefunktion durchgeführt. Das erfindungsgemäße Verfahren kennzeichnet sich dadurch, dass das Aktivieren der Nothaltefunktion in Reaktion auf ein Beenden der Betätigung des Feststellbremse-Bedienelements erfolgt.

Die vorstehenden Ausführungen zum erfindungsgemäßen Fahrerassistenzsystem nach dem ersten Aspekt der Erfindung gelten in entsprechender Weise auch für das erfindungsgemäße Verfahren nach dem zweiten Aspekt der Erfindung. An dieser Stelle und in den Patentansprüchen nicht explizit beschriebene vorteilhafte Ausführungsbeispiele des erfindungsgemäßen Verfahrens entsprechen den vorstehend beschriebenen oder in den Patentansprüchen beschriebenen vorteilhaften Ausführungsbeispielen des erfindungsgemäßen Fahrerassistenzsystems. Die Erfindung wird nachfolgend anhand eines Ausführungsbeispiels unter Zuhilfenahme der beigefügten Zeichnungen beschrieben. In diesen zeigen:
- Fig. 1: ein Ausführungsbeispiel eines erfindungsgemäßen Fahrerassistenzsystems;
- Fig. 2: ein beispielhaftes Ablaufdiagramm; und
- Fig. 3: beispielhafte Zeitverläufe der Betätigung des Feststellbremse-Bedienelements und der Fahrzeugbeschleunigung.

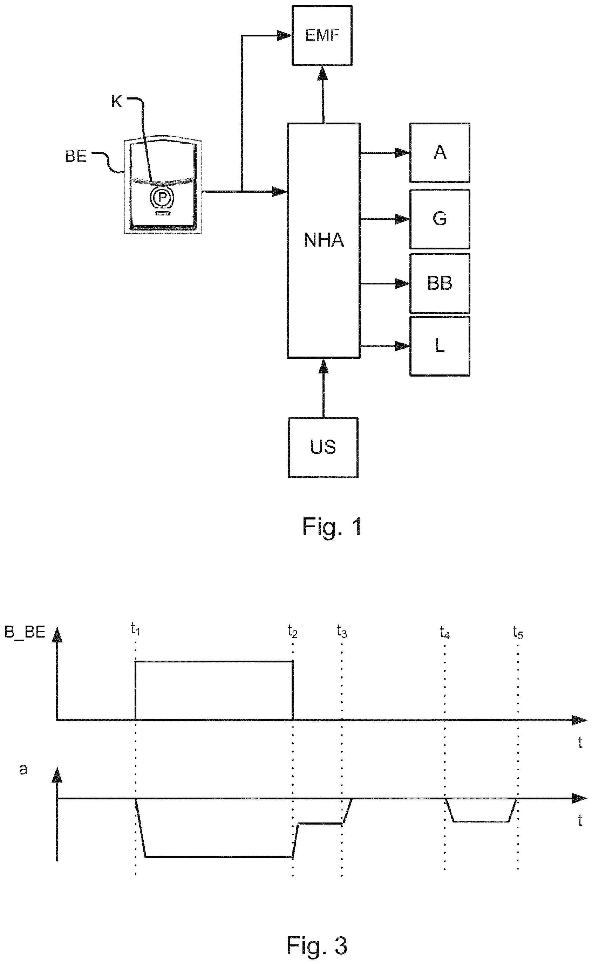

In Fig. 1 ist ein erstes Ausführungsbeispiel eines erfindungsgemäßen Nothalteassistenzsystems NHA mit Nothaltefunktion schematisch dargestellt, welches in einem Kraftfahrzeug, insbesondere in einem Personenkraftwagen, integriert ist. Das Kraftfahrzeug umfasst eine elektrische Feststellbremse EMF sowie ein Feststellbremsen-Bedienelement BE zum Aktivieren der elektrischen Feststellbremse EMF.

Das Feststellbremse-Bedienelement BE zum Aktivieren der elektrischen Feststellbremse EMF ist vorzugsweise ein Schalter, der zum Aktivieren der elektrischen Feststellbremse EMF von der Bedienperson gezogen wird. Hierzu wird beispielsweise mit dem Finger hinter die Kante K des Bedienteils gefasst und das Bedienteil des Schalters BE gezogen. Das Feststellbremse-Bedienelement BE kann vorzugsweise auch in die entgegensetzte Bedienrichtung gedrückt werden, um beispielsweise die elektrische Feststellbremse EMF zu deaktivieren.

In Abhängigkeit der Betätigung des Feststellbremsen-Bedienelements BE kann eine Nothaltefunktion des Nothalteassistenzsystems NHA aktiviert werden, im Rahmen dessen das Fahrzeug dann ein autonomes Nothaltefahrmanöver zum Nothalten des Fahrzeugs, beispielsweise auf dem Seitenstreifen, durchführt.

Bei dem autonomen Nothaltefahrmanöver erfolgt die Längs- und Querführung des Fahrzeugs automatisch. Das Nothalteassistenzsystem übernimmt also die Fahrzeugführung, bis das Fahrzeug in den Stillstand gebracht wird. Hierzu steuert das Nothalteassistenzsystem den Antrieb A, das Getriebe G, die hydraulische Betriebsbremse BB und die Lenkung L über nicht dargestellte Zwischeneinheiten.

Zur Planung und Durchführung des Nothaltefahrmanövers wird Umfeldinformation einer Umfeldsensorik US entgegen genommen, die das Fahrzeugumfeld beobachtet.

Bei dem beispielhaften Nothalteassistenzsystem NHA wird die Nothaltefunktion nicht bereits in Reaktion auf eine Betätigung des Feststellbremse-Bedienelements BE aktiviert, sondern erst in Reaktion auf ein Beenden der Betätigung des Feststellbremse-Bedienelements BE aktiviert.

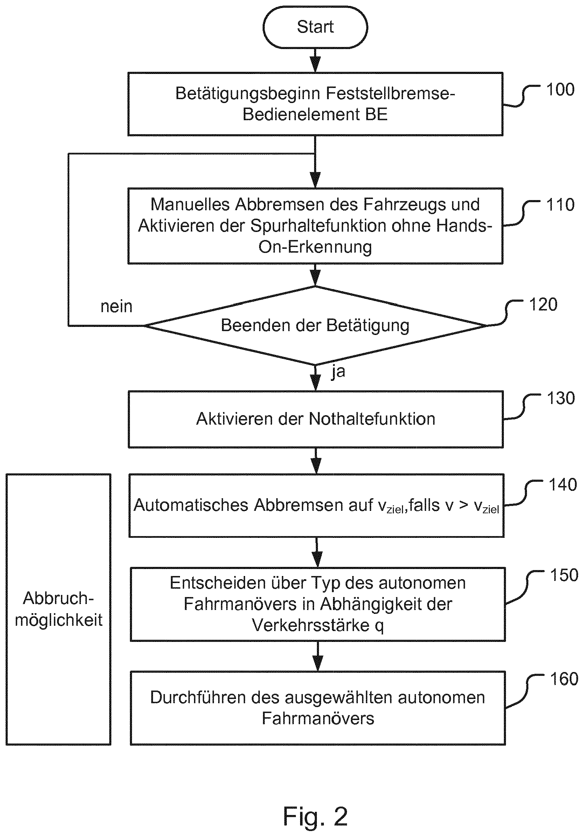

Die Funktionsweise des beispielhaften Nothalteassistenzsystems NHA wird nachfolgend im Zusammenhang mit Fig. 2 und Fig. 3 erläutert.

Im Schritt 100 des Ablaufdiagramms in Fig. 2 wird festgestellt, dass eine Bedienperson (beispielsweise der Fahrer oder der Beifahrer) begonnen hat, das Feststellbremse-Bedienelemente BE zu betätigen. In Fig. 3 ist die Betätigung B_BE des Feststellbremse-Bedienelements BE dargestellt. Zum Zeitpunkt t₁ beginnt die Betätigung B_BE des Feststellbremse-Bedienelements BE, indem der Schalter BE gezogen wird.

In Reaktion auf die Betätigung des Feststellbremse-Bedienelements BE wird das Fahrzeug abgebremst, beispielsweise über die hydraulische Betriebsbremse BB. Dieses manuelle Abbremsen entspricht dem Schritt 110 in Fig. 2. Die in Fig.3 dargestellte Beschleunigung a des Fahrzeugs wird dabei negativ und erreicht einen bestimmten Maximalbetrag der Verzögerung. Das Fahrzeug wird solange weiter verzögert, wie das Feststellbremse-Bedienelement BE weiter betätigt wird.

Außerdem wird in Reaktion auf die Betätigung des Feststellbremse-Bedienelements BE ein etwaig aktives Komfort-Assistenzsystem mit automatisierter Querführung, beispielsweise ein Spurhalteassistent mit Hands-On-Erkennung, automatisch deaktiviert.

Es wird in Reaktion auf die Betätigung des Feststellbremse-Bedienelements BE eine Spurhaltefunktion ohne Hands-On-Erkennung zum automatischen Halten der aktuellen Fahrspur aktiviert.

Dieser manuelle Abbremsprozess und die aktivierte Spurhaltefunktion werden im Sinne der Anmeldung nicht als Teil der Nothaltefunktion verstanden.

Gemäß Schritt 120 wird kontinuierlich geprüft, ob die Bedienperson die Betätigung des Bedienelements BE beendet hat.

Zum Zeitpunkt t₂ beendet die Bedienperson die Betätigung des Feststellbremse-Bedienelements BE; der Schalter BE wird losgelassen.

In Reaktion auf ein Beenden der Betätigung des Feststellbremse-Bedienelements BE wird die Nothaltefunktion aktiviert (s. Schritt 130 in Fig. 2). Die Aktivierung der Funktion wird dem Fahrer angezeigt, beispielsweise auf einer zentralen Anzeige im Fahrzeugcockpit.

Die Nothaltefunktion kann aber jederzeit nach deren Aktivierung abgebrochen werden, beispielsweise durch Betätigen eines zentralen Bedienelements. Auf einer Anzeige im Fahrzeugcockpit wird daher auf die Abbruchmöglichkeit hingewiesen. Alternativ kann die Nothaltefunktion durch Drücken des Schalters BE abgebrochen werden. Darüber hinaus kann die Nothaltefunktion durch Betätigen des Fahrpedals oder Lenkrads abgebrochen werden.

Nach Funktionsaktivierung wird das Fahrzeug in der eigenen Fahrspur auf eine bestimmte Zielgeschwindigkeit v_{ziel}, z. B. v_{ziel} = 100 km/h, automatisch verzögert, falls es nicht bereits eine Geschwindigkeit von v_{ziel} oder weniger hat (s. Schritt 140). Dabei ist die maximale Verzögerung beim Abbremsen des Fahrzeugs vor der Aktivierung der Nothaltefunktion größer als während des Nothaltemanövers.

Die Querführungsvorgabe zum Spurbehalten während des Abbremsens bilden Spurmarkierungen; falls diese vom Fahrzeug nicht erkennbar sind, wird zur Querführung auf das Vorderfahrzeug geregelt.

Zum Zeitpunkt t₃ hat das Fahrzeug die Zielgeschwindigkeit v_{ziel} von 100 km/h erreicht.

Es wird nun entschieden, ob das Fahrzeug auf den Seitenstreifen autonom wechseln und dort halten soll oder alternativ in der aktuellen Spur halten soll (s. Schritt 150 in Fig. 3).

Hierzu wird die Verkehrsstärke q oder eine andere für das Verkehrsaufkommen charakteristische Größe herangezogen, die durch vorherige Beobachtung des Fahrzeugumfelds mittels der Umfeldsensorik US bestimmt wurde.

Ferner können weitere Umgebungsbedingungen wie beispielsweise der Straßentyp (Autobahn oder Landstraße) oder das Vorliegen von Spurgrenzen bei der Entscheidung berücksichtigt werden.

Die für das Verkehrsaufkommen charakteristische Größe q wird durch Mittelung von Zeitlücken zwischen Fahrzeugen bestimmt. Beispielsweise werden hierfür die Zeitlücke zum Vorderfahrzeug, die Zeitlücke zum direkt hinter dem eigenen Fahrzeug fahrenden Fahrzeug, die Zeitlücken zwischen erkannten Objekte in der Spur links vom eigenen Fahrzeug (falls diese Spur vorhanden ist) und die Zeitlücken zwischen erkannten Objekte in der Spur rechts vom eigenen Fahrzeug (falls diese Spur vorhanden ist) bestimmt.

In Abhängigkeit der Zeitlücken und der Anzahl der erkannten Fahrzeuge kann dann die für das Verkehrsaufkommen charakteristische Größe q bestimmt werden. Die Beobachtung des Verkehrsaufkommens erfolgt laufend bereits vor der Betätigung des Feststellbremsen-Bedienelements. Der Wert der für das Verkehrsaufkommen charakteristischen Größe q kann auch bereits vor der Betätigung des Feststellbremsen-Bedienelements berechnet werden.

Eine beispielhafte Entscheidungsstrategie wird nachfolgend beschrieben:
Bei einer Autobahn mit einem geringeren Verkehrsaufkommen (q < qₜₕ) und gut erkennbaren Spurgrenzen wird ein autonomes Fahrmanöver mit einem oder mehreren Spurwechseln und Anhalten auf dem Seitenstreifen durchgeführt.

Bei einer Autobahn mit höherem Verkehrsaufkommen (q > qₜₕ) mit oder ohne erkennbare Spurgrenzen wird als autonomes Fahrmanöver ein Anhalten in der eigenen Spur durchgeführt.

Bei einer Autobahn ohne erkennbare Spurgrenzen und einem erkennbaren Vorderfahrzeug erfolgt ein Anhalten in der eigenen Spur.

Bei einer Autobahn ohne Spurgrenzen und ohne erkennbares Vorderfahrzeug wird in den Stand ohne automatische Querführung verzögert.

Bei einer Landstraße oder im Stadtverkehr mit erkennbaren Spurgrenzen oder einem Vorderfahrzeug erfolgt ein Anhalten in der eigenen Spur.

Bei einer Landstraße oder im Stadtverkehr ohne Spurgrenzen oder ohne erkennbares Vorderfahrzeug wird in den Stand ohne Querführung verzögert.

Neben dem autonomen Fahrmanöver wird nach Aktivierung der Nothaltefunktion der Warnblinker aktiviert. Es wird ferner ein Notruf zu einem Call-Center aufgebaut. Vor Aufbau des Notrufs werden auf den bevorstehenden Aufbau des Notrufs und auf die Abbruchmöglichkeit hingewiesen. Außerdem werden bei Aktivierung der Nothaltefunktion ein oder mehrere Längssicherheitsassistenzsysteme aktiviert, beispielsweise ein automatischer Notbremsassistent, der bei Gefahr aufgrund eines Hindernisses eine Notbremsung unterstützt oder selbsttätig einleitet.

Sofern als Nothaltefahrmanöver ein Anhalten auf dem Seitenstreifen ausgewählt wurde, wird die Nachbarspur auf schnell überholende Fahrzeuge, seitliche Kollisionsgefahren und langsame Objekte vor dem Fahrzeug überwacht, und - sofern laut Überwachung möglich - mit der aktuellen Geschwindigkeit (v_{ziel} oder langsamer) ein langsamer Spurwechsel durchgeführt. Der Spurwechsel wird gegebenenfalls einmal oder mehrfach wiederholt, bis das Fahrzeug den Standstreifen erreicht hat (s. Zeitpunkt t₄ in Fig. 3) .Dort verzögert das Fahrzeug bis in den Stand, bis der Stillstand zum Zeitpunkt t₅ erreicht ist.

Falls ein Anhalten in der eigenen Spur gewählt wurde, wird das Fahrzeug in den Stand verzögert. Die Querführungsvorgabe zum Spurbehalten währenddessen ist die Fahrbahnmarkierung; falls diese nicht erkennbar ist, wird auf das Vorderfahrzeug geregelt. Falls dieses nicht existent oder erkennbar ist, wird ohne einen Quereingriff in den Stand verzögert.

Sofern das Fahrzeug steht, werden automatisch die Getriebeposition P eingelegt, die Zentralverriegelung entriegelt und das Innenlicht eingeschaltet, um auf den Fahrer aufmerksam zu machen; die Warnblinkanlage bleibt aktiviert. Außerdem kann die Feststellbremse EMF automatisch eingelegt werden.

Wenn das Fahrzeug steht, bleibt der Fahrzeugmotor an und es wird ein sonst durch eine Motor-Start-Stopp-Funktion ausgelöster automatischer Motorstopp unterdrückt, damit Klimatisierungssysteme wie InnenraumHeizung, Sitzheizung oder die Innenraum-Kühlung, falls diese vorher aktiv waren, aktiv bleiben, bis Hilfe kommt.

## Patentansprüche

1. Fahrerassistenzsystem (NHA) mit Nothaltefunktion für ein Kraftfahrzeug, wobei das Kraftfahrzeug
- eine elektrische Feststellbremse (EMF) und
- ein Feststellbremse-Bedienelement (BE) zum Aktivieren einer elektrischen Feststellbremse (EMF)
umfasst, und
das Fahrerassistenzsystem (NHA) eingerichtet ist,
- in Abhängigkeit der Betätigung des Feststellbremse-Bedienelements (BE) eine Nothaltefunktion zu aktivieren, und
- im Rahmen der Nothaltefunktion ein autonomes Nothaltefahrmanöver zum Nothalten des Fahrzeugs durchzuführen,
**dadurch gekennzeichnet, dass**
das Fahrerassistenzsystem (NHA) eingerichtet ist,
die Nothaltefunktion in Reaktion auf ein Beenden der Betätigung des Feststellbremse-Bedienelements (BE) zu aktivieren.

2. Fahrerassistenzsystem (NHA) nach Anspruch 1, wobei das Fahrerassistenzsystem (NHA) eingerichtet ist, schon während der Betätigung des Feststellbremse-Bedienelements (BE) ein Abbremsen des Kraftfahrzeugs zu bewirken, welches nicht Teil des Nothaltemanövers ist.

3. Fahrerassistenzsystem (NHA) nach einem der vorhergehenden Ansprüche, wobei das Fahrerassistenzsystem (NHA) eingerichtet ist, bei Betätigung des Feststellbremsen-Bedienelement (BE) eine Spurhaltefunktion zum automatischen Halten der aktuellen Fahrspur zu aktivieren, insbesondere eine Spurhaltefunktion ohne Hands-On-Erkennung.

4. Fahrerassistenzsystem (NHA) nach einem der vorhergehenden Ansprüche, wobei das Fahrerassistenzsystem (NHA) eingerichtet ist, die Nothaltefunktion in Reaktion auf eine Bedienhandlung zum Abbruch der Nothaltefunktion abzubrechen.

5. Fahrerassistenzsystem (NHA) nach Anspruch 4, wobei
- das Feststellbremse-Bedienelement (BE) ein in zwei unterschiedliche Bedienrichtungen betätigbarer Schalter ist, insbesondere ein sowohl ziehbarer als auch drückbarer Schalter ist,
- die Nothaltefunktion in Reaktion auf ein Beenden der in eine erste Bedienrichtung gerichteten Betätigung des Schalters (BE) aktiviert wird und
- das Fahrerassistenzsystem (NHA) eingerichtet ist, die Nothaltefunktion in Reaktion auf eine in die zweite Bedienrichtung gerichtete Betätigung des Feststellbremse-Bedienelements (BE) abzubrechen.

6. Fahrerassistenzsystem (NHA) nach einem der vorhergehenden Ansprüche, wobei das Fahrerassistenzsystem (NHA) eingerichtet ist, das Fahrzeug im Rahmen des autonomen Nothaltefahrmanövers ausgehend von der aktuellen Fahrspur mit autonomer Längs- und Querführung auf einem Seitenstreifen der Fahrbahn zum Halten zu bringen.

7. Fahrerassistenzsystem (NHA) nach einem der vorhergehenden Ansprüche, wobei das Fahrerassistenzsystem (NHA) eingerichtet ist,
- eine für das Verkehrsaufkommen charakteristische Größe, insbesondere eine Verkehrsdichte oder eine Verkehrsstärke, durch Beobachtung des Fahrzeugumfelds zu bestimmen,
- in Abhängigkeit der für das Verkehrsaufkommen charakteristischen Größe zu entscheiden über wahlweise
- die Durchführung eines Nothaltfahrmanövers eines ersten autonomen Nothaltefahrmanövertyps mit Anhalten des Fahrzeugs in der eigenen Fahrspur oder
- die Durchführung eines Nothaltfahrmanövers eines zweiten autonomen Nothaltefahrmanövertyps mit Anhalten des Fahrzeugs auf einem Seitenstreifen der Fahrbahn und
- im Rahmen der Nothaltefunktion ein Nothaltefahrmanöver vom ersten oder zweiten autonomen Nothaltefahrmanövertyp entsprechend der Entscheidung durchzuführen.

8. Fahrerassistenzsystem (NHA) nach Anspruch 7, wobei das Fahrerassistenzsystem (NHA) eingerichtet ist,
- eine oder mehrere Zeitlücken zwischen jeweils zwei Fahrzeugen zu bestimmen und
- in Abhängigkeit der einen oder mehreren Zeitlücken die für das Verkehrsaufkommen charakteristische Größe zu bestimmen.

9. Fahrerassistenzsystem (NHA) nach einem der vorhergehenden Ansprüche, wobei das Fahrerassistenzsystem (NHA) eingerichtet ist, anhand eines oder mehrere Kriterien, insbesondere anhand des Vorliegens von erkennbaren Spurgrenzen und/oder eines Vorderfahrzeugs, zu entscheiden über die Durchführung eines autonomen Nothaltefahrmanövertyps mit Verzögern in den Stand ohne Querführung.

10. Fahrerassistenzsystem (NHA) nach einem der vorhergehenden Ansprüche, wobei
- das Feststellbremse-Bedienelement (BE) ein durch Ziehen betätigbarer Schalter ist, und
- die Nothaltefunktion in Reaktion auf ein Beenden des Ziehens des Schalters (BE) aktiviert wird.

11. Fahrerassistenzsystem (NHA) nach einem der vorhergehenden Ansprüche, wobei das Fahrerassistenzsystem (NHA) eingerichtet ist,
- in Reaktion auf ein Betätigen des Feststellbremse-Bedienelements (BE) oder in Reaktion auf ein Beenden der Betätigung des Feststellbremse-Bedienelements (BE), Fahrerzustandsinformation betreffend den aktuellen Zustand des Fahrers zu bestimmen, und
- in Abhängigkeit der Fahrerzustandsinformation eine Aktivierung der Nothaltefunktion in Reaktion auf ein Beenden der Betätigung des Feststellbremse-Bedienelements (BE) zu unterbinden oder eine bereits derartig aktivierte Nothaltefunktion abzubrechen.

12. Fahrerassistenzsystem (NHA) nach Anspruch 11, wobei das Fahrerassistenzsystem (NHA) eingerichtet ist,
- anhand der Fahrerzustandsinformation zu entscheiden, ob eine Aktivierung der Nothaltefunktion gewünscht ist, und
- im Fall der Entscheidung, dass eine Aktivierung der Nothaltefunktion nicht gewünscht ist, die Aktivierung der Nothaltefunktion in Reaktion auf ein Beenden der Betätigung des Feststellbremse-Bedienelements (BE) zu unterbinden oder eine bereits aktivierte Nothaltefunktion abzubrechen.

13. Fahrerassistenzsystem (NHA) nach einem der Ansprüche 11 bis 12, wobei das Fahrerassistenzsystem (NHA) eingerichtet ist, die Fahrerzustandsinformation
- mittels einer Innenraumkamera und/oder
- durch Auswertung der Betätigung oder Nichtbetätigung eines oder mehrerer Fahrerbedienelemente zur manuellen Fahrzeugführung zu bestimmen.

14. Fahrerassistenzsystem (NHA) nach einem der Ansprüche, wobei
- das Fahrzeug ein Komfort-Fahrerassistenzsystem mit automatischer Längs- und/oder Querführung umfasst und
- das Fahrerassistenzsystem eingerichtet ist, das Komfort-Fahrerassistenzsystem in Reaktion auf eine Betätigung des Feststellbremsen-Bedienelements zu deaktivieren, falls dieses aktiv ist.

15. Verfahren zum Nothalten eines Kraftfahrzeugs, wobei das Kraftfahrzeug
- eine elektrische Feststellbremse (EMF) und
- ein Feststellbremse-Bedienelement (BE) zum Aktivieren einer elektrischen Feststellbremse (EMF)
umfasst, und
das Verfahren die Schritte umfasst:
- Aktivieren (130) einer Nothaltefunktion in Abhängigkeit der Betätigung des Feststellbremse-Bedienelements (BE); und
- Durchführen eines autonomen Nothaltefahrmanövers zum Nothalten des Fahrzeugs im Rahmen der Nothaltefunktion,
**dadurch gekennzeichnet, dass**
das Aktivieren der Nothaltefunktion in Reaktion auf ein Beenden der Betätigung des Feststellbremse-Bedienelements (BE) erfolgt.

## Claims

1. A driver assistance system (NHA) having an emergency stop function for a motor vehicle, wherein the motor vehicle comprises
- an electric parking brake (EMF) and
- parking-brake operating element (BE) for activating an electric parking brake (EMF),
and
the driver assistance system (NHA) is designed
- to activate an emergency stop function in accordance with the actuation of the parking-brake operating element (BE) and,
- as part of the emergency stop function, to perform an autonomous emergency stop driving manoeuvre for the emergency stopping of the vehicle,
**characterised in that**
the driver assistance system (NHA) is designed to activate the emergency stop function in response to an end of the actuation of the parking-brake operating element (BE).

2. A driver assistance system (NHA) according to claim 1, wherein the driver assistance system (NHA) is designed to bring about, already during the actuation of the parking-brake operating element (BE), a braking of the motor vehicle which is not part of the emergency stop manoeuvre.

3. A driver assistance system (NHA) according to any one of the preceding claims, wherein the driver assistance system (NHA) is designed, upon actuation of the parking-brake operating element (BE), to activate a lane-keeping function to automatically keep to the current lane, more especially a lane-keeping function without hands-on detection.

4. A driver assistance system (NHA) according to any one of the preceding claims, wherein the driver assistance system (NHA) is designed to abort the emergency stop function in response to an operator control action to abort the emergency stop function.

5. A driver assistance system (NHA) according to claim 4, wherein
- the parking-brake operating element (BE) is a switch actuatable in two different operator control directions, more especially a switch that can be both pulled and pushed,
- the emergency stop function is activated in response to an end of the actuation of the switch (BE) directed in a first operator control direction, and
- the driver assistance system (NHA) is designed to abort the emergency stop function in response to an actuation of the parking-brake operating element (BE) directed in the second operator control direction.

6. A driver assistance system (NHA) according to any one of the preceding claims, wherein the driver assistance system (NHA) is designed to bring the vehicle to a stop on a shoulder of the roadway as part of the autonomous emergency stop driving manoeuvre starting from the current lane with autonomous longitudinal and transverse guidance.

7. A driver assistance system (NHA) according to any one of the preceding claims, wherein the driver assistance system (NHA) is designed
- to determine a variable characteristic for the volume of traffic, more especially a density of the traffic or an intensity of the traffic, by monitoring the vehicle surroundings,
- to decide, depending on the variable characteristic for the volume of traffic, between
- carrying out an emergency stop driving manoeuvre of a first autonomous emergency stop driving manoeuvre type with the vehicle being stopped in its lane, or
- carrying out an emergency stop driving manoeuvre of a second autonomous emergency stop driving manoeuvre type with the vehicle being stopped on the shoulder of the roadway, and
- to carry out, as part of the emergency stop function, an emergency stop driving manoeuvre of the first or second autonomous emergency stop driving manoeuvre type in accordance with the decision.

8. A driver assistance system (NHA) according to claim 7, wherein the driver assistance system (NHA) is designed
- to determine one or more time intervals between each two vehicles and
- to determine the variable characteristic for the volume of traffic depending on the one or more time intervals.

9. A driver assistance system (NHA) according to any one of the preceding claims, wherein the driver assistance system (NHA) is designed to decide, on the basis of one or more criteria, more especially on the basis of the presence of detectable lane boundaries and/or a leading vehicle, whether to carry out an autonomous emergency stop driving manoeuvre type with deceleration to the stationary state without transverse guidance.

10. A driver assistance system (NHA) according to any one of the preceding claims, wherein
- the parking-brake operating element (BE) is a switch actuatable by pulling, and
- the emergency stop function is activated in response to an end of the pulling of the switch (BE).

11. A driver assistance system (NHA) according to any one of the preceding claims, wherein the driver assistance system (NHA) is designed
- to determine driver's condition information relating to the current condition of the driver in response to an actuation of the parking-brake operating element (BE) or in response to an end of the actuation of the parking-brake operating element (BE), and,
- in accordance with the driver's condition information, to prohibit an activation of the emergency stop function in response to an end of the actuation of the parking-brake operating element (BE) or to abort an emergency stop function already activated in this way.

12. A driver assistance system (NHA) according to claim 11, wherein the driver assistance system (NHA) is designed
- to decide, on the basis of the driver's condition information, whether an activation of the emergency stop function is desired, and
- if it is decided that an activation of the emergency stop function is not desired, to prohibit the activation of the emergency stop function in response to a termination of the actuation of the parking-brake operating element (BE) or to abort an already activated emergency stop function.

13. A driver assistance system (NHA) according to any one of claims 11 to 12, wherein the driver assistance system (NHA) is designed to determine the driver's condition information
- by means of an interior camera and/or
- by evaluating the actuation or non-actuation of one or more driver operator control elements for manual guidance of the vehicle.

14. A driver assistance system (NHA) according to any one of the preceding claims, wherein
- the vehicle comprises a comfort driver assistance system with automatic longitudinal and/or transverse guidance and
- the driver assistance system is designed to deactivate the comfort driver assistance system in response to an actuation of the parking-brake operating element if this is active.

15. A method for the emergency stopping of a motor vehicle, wherein the motor vehicle comprises
- an electric parking brake (EMF) and
- parking-brake operating element (BE) for activating an electric parking brake (EMF),
and
the method comprises the steps:
- activating (130) an emergency stop function in dependence upon the actuation of the parking-brake operating element (BE); and,
- as part of the emergency stop function, performing an autonomous emergency stop driving manoeuvre for the emergency stopping of the vehicle,
**characterised in that**
the emergency stop function is activated in response to an end of the actuation of the parking-brake operating element (BE).

## Revendications

1. Système d'assistance du conducteur (NHA) avec une fonction d'arrêt de secours pour un véhicule,
le véhicule comprenant :
- un frein de stationnement électrique (EMF), et
- un élément de manœuvre (BE) du frein de stationnement pour activer un frein de stationnement électrique (EMF), et
le système d'assistance du conducteur (NHA) est conçu pour,
- activer une fonction d'arrêt de secours en fonction de l'actionnement de l'élément de manœuvre du frein de stationnement (BE),
- dans le cadre de la fonction d'arrêt de secours, effectuer une manœuvre de conduite d'arrêt de secours autonome pour un arrêt de secours du véhicule,
système d'assistance de conduite (NHA) **caractérisé en ce qu'** il est conçu pour activer la fonction d'arrêt de secours en réaction à la fin de l'actionnement de l'élément de manœuvre du frein de stationnement (BE).

2. Système d'assistance du conducteur (NHA) selon la revendication 1,
**caractérisé en ce que**
ce système (NHA) est conçu pour freiner le véhicule déjà pendant l'actionnement de l'élément de manœuvre du frein de stationnement (BE), cette manœuvre ne faisant pas partie de la manœuvre d'arrêt de secours.

3. Système d'assistance du conducteur (NHA) selon l'une des revendications précédentes,
ce système d'assistance du conducteur (NHA) étant conçu pour qu'à l'actionnement de l'élément de manœuvre du frein de stationnement (BE), il active une fonction de maintien sur la trace pour maintenir automatiquement sur la trace de circulation actuelle, en particulier une fonction de maintien sur la trace sans détection de la tenue par les mains.

4. Système d'assistance du conducteur (NHA) selon l'une des revendications précédentes,
selon lequel
le système d'assistance du conducteur (NHA) est conçu pour arrêter la fonction d'arrêt de secours en réaction à une manœuvre pour arrêter la fonction d'arrêt de secours.

5. Système d'assistance du conducteur (NHA) selon la revendication 4, selon lequel
- l'élément de service de frein de stationnement (BE) est un commutateur qui peut être actionné dans deux directions de service différentes notamment un commutateur qui peut à la fois être tiré et poussé,
- la fonction d'arrêt de secours est activée en réaction à la fin de l'actionnement du commutateur (BE) dirigé dans la première direction de service, et
- le système d'assistance du conducteur (NHA) est conçu pour arrêter la fonction d'arrêt de secours en réaction à un actionnement de l'élément de manœuvre du frein de stationnement (BE), orienté dans la seconde direction de service.

6. Système d'assistance du conducteur (NHA) selon l'une des revendications précédentes,
selon lequel
le système d'assistance du conducteur (NHA) est conçu pour mettre à l'arrêt le véhicule dans le cadre de la manœuvre de conduite de secours autonome en partant de la voie de circulation avec guidage longitudinal et transversal autonome sur une bande latérale de la voie de circulation.

7. Système d'assistance du conducteur (NHA) selon l'une des revendications précédentes,
selon lequel
le système d'assistance du conducteur (NHA) est conçu pour,
- déterminer une grandeur caractéristique pour l'événement de circulation, notamment une densité de circulation ou une intensité de circulation par l'observation de l'environnement du véhicule,
- décider en fonction des grandeurs caractéristiques de l'événement de circulation du choix entre :
- exécuter une manœuvre de circulation avec arrêt de secours d'un premier type de manœuvre de circulation d'arrêt de secours, autonome, avec arrêt du véhicule sur sa propre voie de circulation, ou
- exécuter une manœuvre de circulation d'arrêt de secours d'un second type de manœuvre de circulation d'arrêt de secours autonome, avec arrêt du véhicule sur une bande latérale de la voie de circulation, et
- dans le cadre de la fonction d'arrêt de secours, effectuer une manœuvre de circulation d'arrêt de secours du premier ou du second type de manœuvre de circulation d'arrêt de secours autonome correspondant à la décision.

8. Système d'assistance du conducteur (NHA) selon la revendication 7, selon lequel
le système d'assistance du conducteur (NHA) est conçu pour,
- déterminer un ou plusieurs intervalles de temps entre chaque fois deux véhicules, et
- en fonction d'un ou plusieurs intervalles de temps, déterminer la grandeur caractéristique de l'événement de circulation.

9. Système d'assistance du conducteur (NHA) selon l'une des revendications précédentes,
selon lequel
le système d'assistance du conducteur (NHA) est conçu pour qu'à l'aide d'un ou plusieurs critères, notamment à l'aide de la présence de limites de trace reconnaissables et/ou d'un véhicule circulant en amont, décider de l'exécution d'une manœuvre de circulation d'arrêt de secours autonome en temporisant dans l'état, son guidage transversal.

10. Système d'assistance du conducteur (NHA) selon l'une des revendications précédentes,
selon lequel
- l'élément de manœuvre du frein de stationnement (BE) est un commutateur actionné par la traction,
- la fonction d'arrêt de secours est activée en réaction à la fin de la traction exercée sur le commutateur (BE).

11. Système d'assistance du conducteur (NHA) selon l'une des revendications précédentes,
selon lequel
le système d'assistance du conducteur (NHA) est conçu pour,
- déterminer en réaction de l'actionnement de l'élément de manœuvre du frein de stationnement (BE) ou en réaction à la fin de l'actionnement de l'élément de manœuvre du frein de stationnement (BE), une information d'état du conducteur concernant l'état actuel du conducteur, et
- en fonction de l'information de l'état du conducteur, arrêter l'activation de la fonction d'arrêt de secours en réaction à la fin de l'actionnement de l'élément de manœuvre de frein de stationnement (BE) pour interdire ou arrêter une fonction d'arrêt de secours déjà activée ainsi.

12. Système d'assistance du conducteur (NHA) selon la revendication 11,
selon lequel
le système d'assistance du conducteur (NHA) est conçu pour,
- décider à partir de l'information d'état du conducteur si une activation de la fonction d'arrêt de secours est souhaitable, et
- au cas où la décision d'activer la fonction d'arrêt de secours n'est pas souhaitable, interdire l'activation de la fonction d'arrêt de secours en réaction à la fin de l'actionnement de l'élément de manœuvre du frein de stationnement (BE) ou interrompre une fonction d'arrêt de secours déjà activée.

13. Système d'assistance du conducteur (NHA) selon l'une des revendications 11 à 12,
selon lequel
le système d'assistance de conduite (NHA) est conçu pour déterminer l'information d'état du conducteur suivante :
- à l'aide d'une caméra installée dans l'habitacle, et/ou
- par l'exploitation de l'actionnement ou le non-actionnement d'un ou plusieurs éléments de commande du conducteur pour la conduite manuelle du véhicule.

14. Système d'assistance du conducteur (NHA) selon l'une des revendications,
selon lequel
- le véhicule comporte un système d'assistance du conducteur de confort avec guidage longitudinal et/ou transversal automatique, et
- le système d'assistance du conducteur est conçu pour désactiver le système d'assistance de confort du conducteur en réaction à un actionnement de l'élément de manœuvre du frein de stationnement si celui-ci était activé.

15. Procédé pour effectuer un arrêt de secours d'un véhicule selon lequel le véhicule comporte
- un frein de stationnement électrique (EMF), et
- un élément de manœuvre de frein de stationnement (BE) pour activer un frein de stationnement électrique (EMF), et
le procédé comprend les étapes consistant à :
- activer (130) une fonction d'arrêt de secours en fonction de l'actionnement de l'élément de manœuvre du frein de stationnement (BE), et
- effectuer une manœuvre de circulation d'arrêt de secours autonome pour arrêter le véhicule dans le cadre de la fonction d'arrêt de secours, procédé **caractérisé en ce que**
l'activation de la fonction d'arrêt de secours se fait en réaction à la fin de l'actionnement de l'élément de manœuvre du frein de stationnement (BE).
